# FASCICULE DE BREVET EUROPEEN

(11) **EP 3 145 783 B1**
(45) Date de publication et mention de la délivrance du brevet: **23.06.2021**
(21) Numéro de dépôt: 15732307.2
(22) Date de dépôt: 13.05.2015
(51) Int. Cl.: B60L 15/20, B60W 30/18, B60W 10/08, B60W 10/18

(54) **PROCÉDÉ DE CONTRÔLE D'UN GROUPE MOTOPROPULSEUR D'UN VÉHICULE, DISPOSITIF ET VÉHICULE CORRESPONDANT**
VERFAHREN ZUR STEUERUNG EINES ANTRIEBSSTRANGS EINES FAHRZEUGS SOWIE ENTSPRECHENDE VORRICHTUNG UND FAHRZEUG
METHOD FOR CONTROLLING A POWER TRAIN OF A VEHICLE, AND CORRESPONDING DEVICE AND VEHICLE

(30) Priorité: 21.05.2014 FR 1454584
(43) Date de publication de la demande: 29.03.2017
(73) Titulaire: Renault S.A.S., 92100 Boulogne-Billancourt (FR)
(72) Inventeur: FONTVIEILLE, Laurent, F-91190 Gif-sur-Yvette (FR); BUIS, Emmanuel, F-91330 Verrieres-le-Buisson (FR); MARCHAIS, Florent, F-91580 Bouray Sur Juine (FR)
(86) Numéro de dépôt international: PCT/FR2015/051274
(87) Numéro de publication internationale: WO 2015/177441

(56) Documents cités:
- EP-A1- 1 138 545
- US-A1- 2009 043 465
- US-A1- 2011 184 615
- US-A1- 2012 150 384
- None

## Description

### 1. Domaine de l'invention

L'invention concerne le domaine des véhicules automobiles, en particulier tout véhicule électrique ou hybride équipé d'au moins un moteur électrique. L'invention concerne un procédé de contrôle d'un groupe motopropulseur d'un véhicule lorsque le véhicule est immobilisé sur une surface présentant tout type de pente. Elle vise également un dispositif ainsi que le véhicule correspondant.

### 2. Art antérieur

Dans un véhicule électrique ou hybride, au moins un moteur électrique génère un couple moteur qui est transmis aux roues par l'intermédiaire d'un mécanisme réducteur pour entraîner le véhicule. Le moteur électrique est relié au véhicule au moyen de suspensions permettant de limiter la propagation des vibrations générées par le moteur électrique. Lorsque le véhicule est immobilisé par un dispositif de frein de parking sur une surface, telle qu'un parking ou une route présentant une pente plus ou moins importante, une force qui est fonction de la masse du véhicule et de l'angle de la pente peut être exercée sur le dispositif de frein de parking.

L'un des problèmes lié à cette force réside dans le fait qu'elle engendre un basculement du moteur électrique autour d'une position d'équilibre correspondant à une position neutre ou stable (pente nulle). Par ailleurs, lorsque le dispositif de frein de parking passe d'une position serrée à une position desserrée, les suspensions ramènent l'ensemble du groupe motopropulseur GMP (moteur électrique, moteur à combustion interne, boîte de vitesse, etc.) de manière brusque vers sa position d'équilibre neutre ou stable ce qui crée des oscillations du moteur électrique autour de sa position d'équilibre et des bruits de chocs mécaniques qui se propagent dans l'habitacle du véhicule et qui sont perçus par les occupants du véhicule.

Il est connu par le document US 7 496 435, un procédé de contrôle d'un groupe motopropulseur dans lequel est appliquée une consigne de couple à un couple moteur généré par le moteur électrique lorsque le dispositif de frein de parking est dans sa position serrée afin de corriger les vibrations et grincements du dispositif de frein de parking qui sont dus aux variations du couple moteur. Toutefois, ce procédé de contrôle ne permet pas d'éviter que le moteur électrique ne bascule autour de sa position d'équilibre stable, notamment lorsque le dispositif de frein de parking passe d'une position serrée à une position de desserrée et en particulier, si la surface sur laquelle est immobilisée le véhicule présente une pente.

Il est connu du document US2009/0043465 un procédé de contrôle d'un groupe motopropulseur dans lequel le moteur électrique est contrôlé de manière à réduire le choc lors du désengagement du frein de parking.

### 3. Objectifs de l'invention

L'invention a notamment pour objectif de pallier tout ou partie des inconvénients de l'art antérieur.

Un objectif de l'invention est d'éviter le basculement brusque du moteur électrique d'un groupe motopropulseur d'un véhicule immobilisé lorsque le dispositif de frein de parking passe d'une position serrée à une position desserrée et ainsi éviter les oscillations, vibrations et bruits dans l'habitacle du véhicule.

Un autre objectif de l'invention est de proposer une solution qui soit simple, universelle et peu coûteuse.

### 4. Résumé de l'invention

Ces objectifs sont atteints grâce un procédé de contrôle d'un groupe motopropulseur d'un véhicule immobilisé dans une position de parking, le véhicule étant équipé d'un dispositif de frein de parking pour immobiliser le véhicule et d'au moins un moteur électrique, le procédé étant remarquable en ce qu'il comprend les étapes suivantes :
- détection du sens et/ou de données d'une pente lorsque le dispositif de frein de parking est dans une position serrée;
- détection d'un passage de la position serrée à une position desserrée du dispositif de frein de parking; et,
- application d'une consigne de couple moteur au moteur électrique en fonction du sens et/ou des données de la pente détectées.

Cette solution permet de résoudre les problèmes précités. En particulier, la consigne de couple permet de maintenir le moteur électrique dans sa position initiale après serrage du dispositif de frein de parking et jusqu'à ce que celui-ci se trouve dans sa position desserrée. Il n'y a donc plus d'oscillations du moteur électrique, ni d'à-coup quand le dispositif de frein de parking quitte sa position serrée pour libérer le moteur électrique.

Selon le mode de réalisation de l'invention, le procédé comprend en outre une étape de passage progressif d'une valeur non-nulle de la consigne de couple moteur vers une valeur nulle. Cette étape permet de ramener le moteur dans sa position d'équilibre correspondant à une situation dans laquelle le véhicule serait immobilisé sur une surface ne présentant pas de pente.

Afin de maîtriser et contrôler la « libération » du moteur électrique de manière optimale, il est prévu que l'application de la consigne de couple soit maintenue depuis le début du passage de la position serrée jusqu'à la fin du passage à la position desserrée. Cela permet de garder le moteur électrique dans une position d'équilibre (différente de la position d'équilibre sur une pente nulle) sans créer des à-coups et des oscillations.

De manière avantageuse, le passage du dispositif de frein de parking de la position serrée à la position desserrée, et inversement, est mis en œuvre par l'actionnement d'un moyen de commande du dispositif de frein de parking.

Selon le procédé, la détection du sens de la pente peut être est opérée lorsqu'un moyen de commande du dispositif de frein de parking se trouve dans une position de désenclenchement et que le dispositif de frein de parking est dans sa position serrée. Dans ce cas le véhicule est toujours immobilisé et s'assure qu'un utilisateur ou occupant sera apte à maîtriser le véhicule pour la prochaine phase (démarrage).

Selon une variante de réalisation, l'étape de détection comprend une étape de détermination de la valeur de la pente de sorte à connaitre de manière plus précise la valeur de la consigne de couple moteur à appliquer au GMP. Selon ce mode de réalisation, les étapes de détection du sens et/ou des données de la pente et de détermination de la valeur de la pente peuvent être concomitantes. Cela peut être possible au moyen d'un système de contrôle de trajectoire.

Selon un autre mode de réalisation, l'étape de détection du sens et/ou des données de la pente peut comprendre une étape de détection d'un sens de basculement du moteur électrique par rapport à une position neutre dudit moteur électrique de sorte à déterminer le sens et l'importance de la pente.

Toujours dans le même but, l'étape de détection du sens et/ou des données de la pente peut comprendre une étape de détection du sens de rotation d'un moyen d'entraînement du rotor du moteur électrique coopérant avec le dispositif de frein de parking pour immobiliser le véhicule.

Avantageusement, le procédé prévoit une étape de mise en mémoire du sens et/ou des données de la pente détectées afin que ces informations soient disponibles lors d'un prochain démarrage du véhicule (sortie de la position d'immobilisation).

L'invention se rapporte également à un dispositif de contrôle d'un groupe motopropulseur d'un véhicule immobilisé dans une position de parking comprenant des moyens agencés pour mettre en œuvre le procédé décrit ci-dessus.

L'invention a également pour objet un véhicule automobile comprenant un groupe motopropulseur, un dispositif de frein de parking pour immobiliser le véhicule dans une position de parking, au moins un moteur électrique et un dispositif de contrôle dudit groupe motopropulseur qui présente les caractéristiques telles que susmentionnées.

### 5. Liste des figures

D'autres caractéristiques et avantages innovants ressortiront de la description ci-après, fournie à titre indicatif et nullement limitatif, en référence aux dessins annexés, dans lesquels :
- La figure 1 est une représentation schématique de l'agencement entre différents organes d'un véhicule électrique ou hybride ;
- La figure 2 est une vue schématique d'un moteur électrique coopérant avec un dispositif de frein de parking dans une position d'équilibre;
- La figure 3 représente schématiquement le moteur électrique basculant autour d'une position d'équilibre telle qu'illustrée sur la figure 2 ;

- Les figures 4 et 5 sont des schémas bloc dans lesquels sont représentées les étapes du procédé selon des modes de réalisation ;
- La figure 6 illustre sous la forme d'un algorithme, les différentes étapes de l'étape de détection du sens et/ou des données d'une pente ; et
- La figure 7 illustre sous la forme d'un algorithme, les différentes étapes du procédé de contrôle d'un GMP selon un mode de réalisation employant un ESP et,
- La figure 8 est un chronogramme dans lequel est représenté le retour progressif du couple moteur vers une valeur nulle selon une étape de passage progressif de la valeur de consigne du couple moteur comme le prévoit l'invention.

### 6. Description détaillée

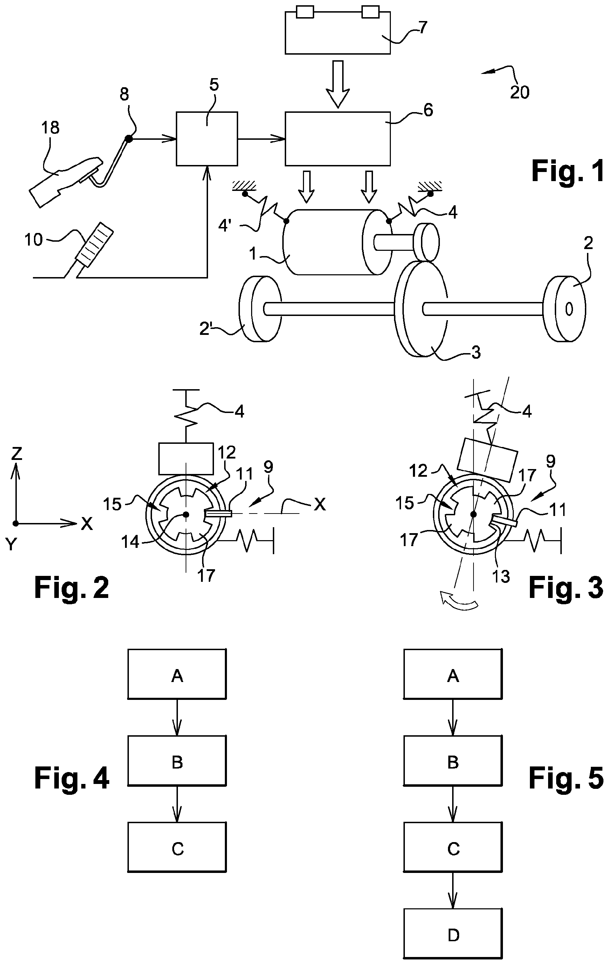

L'invention concerne un procédé de contrôle d'un groupe motopropulseur d'un véhicule 20 électrique ou hybride immobilisé dans une position de parking. Dans un véhicule 20 électrique ou hybride le groupe motopropulseur siglé en français GMP, comprend, tel que représenté schématiquement sur la figure 1, au moins un moteur électrique 1, un mécanisme de réduction 3, des suspensions moteur 4, 4', un dispositif de contrôle du groupe motopropulseur et une batterie 7 destiné à alimenter le moteur électrique 1. Ce dernier génère un couple moteur qui est transmis aux roues 2, 2' (deux roues sont représentées sur la figure 1) par l'intermédiaire du mécanisme de réduction 3 pour entraîner le véhicule 20.

Le dispositif de contrôle du groupe motopropulseur comprend au moins un calculateur 5 de contrôle (UCE), un ensemble électronique de puissance 6, plusieurs moyens de détection tels que des capteurs de position angulaires, capteur de commande de gaz, capteur de commande des freins (sur les pédales de freins) et un capteur de position d'un dispositif de frein de parking, permettant de détecter et/ou de mesurer différentes valeurs de paramètres ou variables de sorte à définir un état du véhicule 20.

Ce dernier comprend également un organe de commande 8 qui actionne des moyens d'actionnement hydrauliques (non représentés) aptes à réduire la vitesse (freinage), voire réduire la vitesse jusqu'à l'arrêt du véhicule 20. Cet organe de commande 8 comprend généralement une pédale de frein susceptible d'être actionné par le pied 18 du conducteur ou occupant du véhicule 20. L'organe de commande 8 peut prendre une position d'enclenchement dans laquelle celui-ci est actionné par le conducteur et une position de désenclenchement dans laquelle l'organe de commande 8 n'est plus actionné par le conducteur.

Par ailleurs, le véhicule 20 comprend un dispositif de frein de parking 9 destiné à immobiliser le véhicule 20 dans une position de parking. Le dispositif de frein de parking 9 est utilisé de manière générale pour des arrêts prolongés du véhicule (fonction de stationnement).

Le véhicule 20 comprend bien entendu d'autres organes qui n'ont pas été décrits ou illustrés pour des raisons de simplification et de compréhension de l'invention.

Pour immobiliser le véhicule dans la position de parking, le conducteur utilise le dispositif de frein de parking 9 qui est actionné par un moyen de commande 10.

Le moyen de commande 10 peut être mécanique, par exemple un levier de manœuvre ou peut être électrique, par exemple un « bouton ». Dans le cas d'un véhicule automatique, le levier de manœuvre est un levier de vitesse.

Le dispositif de frein de parking 9 peut prendre une position serrée dans laquelle le moteur électrique 1 est immobilisé et une position desserrée dans laquelle le moteur électrique 1 peut tourner. Le moteur électrique 1 comprend un arbre de transmission 14 formant un rotor et auquel est couplée de manière coaxiale une roue dentée 12.

Sur les figures 2 et 3, la roue dentée 12 présente quatre dents 17. Le dispositif de frein de parking 9 comprend un doigt de blocage 11 ou « doigt de park » destiné à coopérer avec la roue dentée 12. Le doigt de blocage 11 est mobile suivant un axe X entre une position de désengagement dans laquelle l'arbre de transmission et la roue dentée sont libérés et peuvent tourner, et une position d'engagement dans laquelle une extrémité 13 du doigt de blocage 11 est engagée dans un espace interdenture 15 de la roue dentée 12 afin d'immobiliser le véhicule 20 dans la position de parking. La roue dentée 12 et l'arbre de transmission 14 tourne autour d'un axe Y qui est perpendiculaire à l'axe X. Dans la position serrée du dispositif de frein de parking 9, le doigt de blocage 11 est engagé dans l'espace interdenture 15 de la roue dentée 12 et dans la position desserrée du dispositif de frein de parking 9, le doigt de blocage 11 est désengagé de l'espace interdenture 15 de la roue dentée 12.

Lorsque le véhicule est immobilisé sur une surface présentant une pente P nulle, le moteur électrique 1 occupe une position d'équilibre neutre ou stable. Dans cette position d'équilibre, les contraintes appliquées sur le dispositif de frein de parking 9 sont faibles, voire nulles.

Conformément à l'invention et à la figure 4, le procédé de contrôle du groupe motopropulseur du véhicule 20 immobilisé dans une position de parking, comprend une étape de détection A du sens et/ou des données d'une pente P lorsque le dispositif de frein de parking 9 est dans sa position serrée. Est suivie une étape de détection B d'un passage de la position serrée à la position desserrée du dispositif de frein de parking 9. Puis se suit une étape d'application C d'une consigne de couple moteur Cp au moteur électrique 1 en fonction du sens et/ou de données de la pente P détectée au moment de la détection du passage de la position serrée à la position desserrée.

Le procédé comprend en outre, tel qu'illustré sur la figure 5, une étape de passage D progressif d'une valeur non-nulle de la consigne de couple moteur vers une valeur nulle qui sera décrite ultérieurement.

De manière avantageuse, le passage du dispositif de frein de parking 9 de la position serrée à la position desserrée, et inversement, est mis en œuvre par l'actionnement du moyen de commande 10 du dispositif de frein de parking 9.

Selon un mode de réalisation de l'invention, la position serrée et desserrée du dispositif de frein de parking 9 est conditionné par l'enclenchement de l'organe de commande 8 de la part du conducteur signifiant que le conducteur est dans le véhicule et que celui-ci est capable de maîtriser le véhicule. La position d'enclenchement ou de désenclenchement de l'organe de commande 8 est détectée et mesurée par un capteur de position (non représenté) lié à l'organe de commande. L'organe de commande 8 peut comprendre l'actionnement d'un système d'aide au démarrage en côte connu en anglais sous l'expression « Hill Start Assistant » et siglé en anglais HSA.

De manière préférée, le procédé de contrôle du groupe motopropulseur est exécuté par un programme de logiciel stocké dans une mémoire du calculateur 5.

Dans un mode de réalisation du procédé selon l'invention, l'étape de détection A est réalisée que si certaines informations ont été vérifiées. Si ces informations ne sont pas vérifiées, le programme retourne au début de l'étape A. Les informations qui doivent être vérifiées pour l'étape A sont les suivantes :
- Dispositif de frein de parking 9 dans une position serrée ou dans une position desserrée. L'état du dispositif de frein de parking 9 est avantageusement vérifié par la position du doigt de blocage 11. L'engagement ou le désengagement du doigt de blocage 11 est détecté par un capteur de position.
- Fin de la position serrée du dispositif de frein de parking 9. Cette entrée est vérifiée par le capteur vérifiant l'état du dispositif de frein de parking 9. Plus précisément, est vérifiée la fin de l'engagement du doigt de blocage 11.
- Données de mouvement du moteur électrique 1. Ces données sont déterminées par au moins un capteur de position angulaire (non représenté) qui indique le sens de déplacement du rotor 14 par rapport à la position d'équilibre du moteur électrique 1.

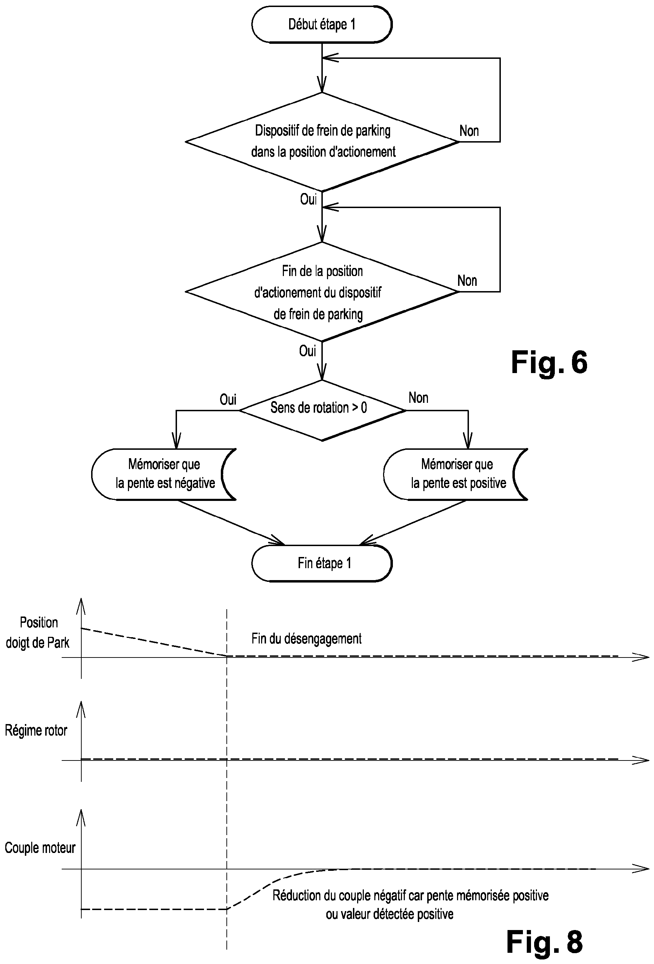

Comme illustré sur l'algorithme de la figure 6, la détection A du sens de la pente est exécutée lorsqu'il est détecté, en étape E, que le dispositif de frein de parking 9 est dans sa position serrée. En particulier, il est vérifié la fin de la position serrée du dispositif de frein de parking 9.

Comme indiqué précédemment, pour que le dispositif de frein de parking passe dans sa position serrée, le programme peut vérifier en étape G la position d'enclenchement de l'organe de commande 8. Cela garantit que le rotor 14 ne tournera pas pendant que le dispositif de frein de parking 9 est actionné. Lorsqu'est détecté en G la fin de la position serrée du dispositif de frein de parking 9, l'organe de commande 8 peut être désenclenché en étape H.

Le programme vérifie alors les données de mouvement du moteur électrique 1. En particulier, le sens et/ou les données de la pente P sont déterminés à l'aide d'une étape de détection K d'un sens de basculement du moteur électrique 1 par rapport à la position d'équilibre (position stable, pente nulle) du moteur électrique 1. Il est déterminé si en basculant, le moteur électrique 1 tourne dans un sens négatif ou dans un sens positif par rapport au sens horaire.

Dans un autre mode de réalisation, le sens et/ou les données de la pente P sont déterminés à l'aide d'une étape de détection K' du sens de rotation d'un moyen d'entraînement du rotor du moteur électrique coopérant avec le dispositif de frein de parking pour immobiliser le véhicule. Plus précisément, le capteur de position angulaire détecte, dans l'espace interdenture 15, le mouvement de la roue dentée 12 par rapport au doigt de blocage 11. Comme précédemment, il est déterminé le sens positif ou négatif de rotation de la roue dentée 12 par rapport au sens horaire. Bien entendu, selon l'agencement et l'aménagement du moteur électrique 1 et des différents éléments du groupe motopropulseur une rotation positive selon le sens anti horaire peut indiquer que la pente est positive.

Suivant encore une autre variante de réalisation, le sens et/ou les données de la pente P sont déterminés à l'aide d'une étape de détermination I de la valeur de la pente. Cette étape de détermination I est réalisée au moyen d'un système de contrôle de trajectoire (non représenté) tel qu'un Électro-Stabilisateur Programmé (ESP). Le système de contrôle de trajectoire comprend un accéléromètre apte à mesurer une accélération longitudinale du véhicule à tout moment pour déterminer l'angle et/ou l'inclinaison de la pente P. L'étape de détection A et l'étape de détermination K peuvent être concomitantes.

Le procédé comprend également une étape de mise en mémoire J du sens et/ou des données (dont la valeur de la pente déterminée à l'étape J de la pente P détectée. Ces derniers sont transmis, puis mémorisés dans le calculateur 5 durant l'immobilisation du véhicule de sorte qu'ils soient disponibles au prochain démarrage du véhicule 20. Dans le mode de réalisation faisant intervenir l'accéléromètre, le sens et/ou les données de la pente P sont obtenus (lus) au moment du démarrage du véhicule. Ceux-ci sont ensuite transmis, puis mémorisés dans le calculateur 5.

Une fois le sens et/ou les données de pente détectés et mémorisés, le calculateur 5 calcule la consigne de couple moteur Cp à appliquer au moteur électrique 1 telle que prévue à l'étape C. La valeur de la consigne de couple moteur Cp est définie lors des réglages effectués pour la mise au point du véhicule avant sa commercialisation. Cette consigne de couple moteur Cp permettra au groupe motopropulseur GMP d'appliquer une force au moteur électrique 1 permettant d'annuler celle exercée sur le dispositif de frein de parking 9 afin de maintenir le moteur électrique 1 dans une position d'équilibre avant le désengagement du doigt de blocage 11.

La valeur de la consigne du couple moteur Cp dépend des données de rotation du moyen d'entraînement du rotor ou de la force exercée sur le dispositif de frein de parking 9. Le signe de la consigne de couple moteur Cp peut être négatif ou positif selon le sens de la pente P.

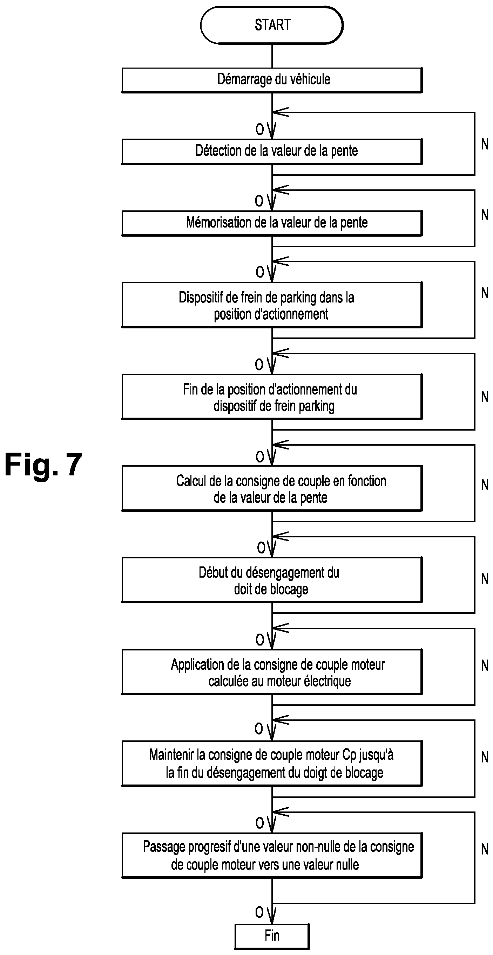

Alternativement, ou de manière complémentaire, la valeur de la consigne de couple moteur Cp est fonction des données d'inclinaison ou d'angle de la pente P et/ou du véhicule si l'information est disponible au démarrage du véhicule (au moyen de l'ESP par exemple). L'angle peut être exprimé en radian, degré ou en pourcentage. Le calcul de la consigne de couple moteur Cp peut être défini suivant la relation suivante : Cp = M*g*sin(α)*R/r ; avec M étant la masse du véhicule qui est considéré comme constante ; g étant la constante de l'accélération de la pesanteur ; α étant l'angle de l'inclinaison ; R étant le rayon de la roue et r étant le rapport de la réduction de la transmission. La consigne de couple moteur Cp ainsi calculée est appliquée au moteur électrique pour réduire les oscillations, voir les supprimer. L'algorithme de la figure 7, illustre un exemple de fonctionnement du procédé de contrôle d'un groupe motopropulseur utilisant le système ESP.

La consigne de couple moteur Cp est maintenue depuis le début du passage de la position serrée jusqu'à la fin du passage à la position desserrée de sorte à maintenir le moteur électrique 1 dans la position dans laquelle celui-ci ou le moyen d'entrainement du rotor a basculé. Ainsi, on évite les à-coups, les oscillations, etc.

Puis, afin de ramener le moteur électrique dans sa position d'équilibre stable (pente nulle), la valeur de la consigne de couple moteur Cp qui a été calculée par le calculateur 5 est ramenée progressivement vers une valeur nulle telle que représentée sur le chronogramme de la figure 8. Ce retour à l'équilibre est réalisé de manière contrôlée en réduisant progressivement le couple moteur jusqu'à zéro.

L'invention est décrite dans ce qui précède à titre d'exemple. Il est entendu que la personne de l'art est à même de réaliser différentes variantes de réalisation de l'invention, en associant par exemple les différentes caractéristiques ci-dessus prises seules ou en combinaison, sans pour autant sortir du cadre de l' invention définie par les revendications.

## Revendications

1. Procédé de contrôle d'un groupe motopropulseur d'un véhicule (20) immobilisé dans une position de parking, le véhicule (20) étant équipé d'un dispositif de frein de parking (9) pour immobiliser le véhicule et d'au moins un moteur électrique (1), le procédé comprenant les étapes suivantes :
- détection (A) du sens et/ou de données d'une pente (P) lorsque le dispositif de frein de parking est dans une position serrée;
- détection (B) d'un passage de la position serrée à une position desserrée du dispositif de frein de parking (9); et,
- application (C) d'une consigne de couple moteur au moteur électrique (1) en fonction du sens et/ou des données de la pente (P) détectés,
le procédé étant **caractérisé en ce qu'**il comprend en outre une étape de passage (D) progressif d'une valeur non-nulle de la consigne de couple moteur vers une valeur nulle.

2. Procédé selon la revendication 1, **caractérisé en ce que** l'application (C) de la consigne de couple est maintenue depuis le début du passage de la position serrée jusqu'à la fin du passage à la position desserrée.

3. Procédé selon la revendication 1 ou 2, caractérisé en ce le passage du dispositif de frein de parking de la position serrée à la position desserrée, et inversement, est mis en œuvre par l'actionnement d'un moyen de commande (10) du dispositif de frein de parking (9).

4. Procédé selon l'une quelconque des revendications 1 à 3, **caractérisé en ce que** la détection (A) du sens de la pente (P) est opérée lorsqu'un organe de commande (8) du dispositif de frein de parking (9) se trouve dans une position de désenclenchement et que le dispositif de frein de parking (9) est dans sa position serrée.

5. Procédé selon l'une quelconque des revendications 1 à 4, **caractérisé en ce que** l'étape de détection (A) comprend une étape de détermination (I) de la valeur de la pente (P).

6. Procédé selon la revendication 5, **caractérisé en ce que** les étapes de détection (A) du sens et/ou des données de la pente (P) et de détermination (I) de la valeur de la pente (P) sont concomitantes.

7. Procédé selon l'une quelconque des revendications 1 à 4, **caractérisé en ce que** l'étape de détection (A) du sens et/ou des données de la pente (P) comprend une étape de détection (K) d'un sens de basculement du moteur électrique (1) par rapport à une position neutre dudit moteur électrique (1).

8. Procédé selon l'une quelconque des revendications 1 à 4, **caractérisé en ce que** l'étape de détection (A) du sens et/ou des données de la pente (P) comprend une étape de détection (K') du sens de rotation d'un moyen d'entraînement du rotor du moteur électrique (1) coopérant avec le dispositif de frein de parking (9) pour immobiliser le véhicule (20).

9. Procédé selon l'une quelconque des revendications 1 à 8, **caractérisé en ce qu'**il comprend une étape de mise en mémoire (J) du sens et/ou des données de la pente (P) détectées.

10. Dispositif de contrôle d'un groupe motopropulseur d'un véhicule (20) immobilisé dans une position de parking **caractérisé en ce qu'**il comprend des moyens agencés pour mettre en œuvre le procédé selon l'une des revendications 1 à 9.

11. Véhicule (20) automobile comprenant un groupe motopropulseur, un dispositif de frein de parking (9) pour immobiliser le véhicule (20) dans une position de parking, au moins un moteur électrique (1) et un dispositif de contrôle dudit groupe motopropulseur selon la revendication 10.

## Patentansprüche

1. Verfahren zur Steuerung eines Antriebsstrangs eines Fahrzeugs (20), welches in einer Parkposition unbeweglich ist, wobei das Fahrzeug (20) mit einer Parkbremsvorrichtung (9), um das Fahrzeug unbeweglich zu machen, und mit wenigstens einem Elektromotor (1) ausgestattet ist, wobei das Verfahren die folgenden Schritte umfasst:
- Erkennen (A) der Richtung und/oder von Daten einer Neigung (P), wenn sich die Parkbremsvorrichtung in einer angezogenen Position befindet;
- Erkennen (B) eines Übergangs von der angezogenen Position zu einer gelösten Position der Parkbremsvorrichtung (9); und
- Anwenden (C) eines Motordrehmoment-Sollwertes auf den Elektromotor (1) in Abhängigkeit von der Richtung und/oder den Daten der Neigung (P), die erkannt wurden,
wobei das Verfahren **dadurch gekennzeichnet ist, dass** es außerdem einen Schritt des allmählichen Übergangs (D) von einem von null verschiedenen Wert des Motordrehmoment-Sollwertes zu einem Wert null umfasst.

2. Verfahren nach Anspruch 1, **dadurch gekennzeichnet, dass** das Anwenden (C) des Drehmoment-Sollwertes vom Beginn des Übergangs von der angezogenen Position bis zum Ende des Übergangs in die gelöste Position aufrechterhalten wird

3. Verfahren nach Anspruch 1 oder 2, **dadurch gekennzeichnet, dass** der Übergang der Parkbremsvorrichtung von der angezogenen Position in die gelöste Position und umgekehrt durch die Betätigung eines Steuerungsmittels (10) der Parkbremsvorrichtung (9) bewirkt wird.

4. Verfahren nach einem der Ansprüche 1 bis 3, **dadurch gekennzeichnet, dass** das Erkennen (A) der Richtung der Neigung (P) erfolgt, wenn sich ein Steuerungsorgan (8) der Parkbremsvorrichtung (9) in einer Auslöseposition befindet und die Parkbremsvorrichtung (9) in ihrer angezogenen Position ist.

5. Verfahren nach einem der Ansprüche 1 bis 4, **dadurch gekennzeichnet, dass** der Schritt des Erkennens (A) einen Schritt des Bestimmens (I) des Wertes der Neigung (P) umfasst.

6. Verfahren nach Anspruch 5, **dadurch gekennzeichnet, dass** die Schritte des Erkennens (A) der Richtung und/oder der Daten der Neigung (P) und des Bestimmens (I) des Wertes der Neigung (P) gleichzeitig ausgeführt werden.

7. Verfahren nach einem der Ansprüche 1 bis 4, **dadurch gekennzeichnet, dass** der Schritt des Erkennens (A) der Richtung und/oder der Daten der Neigung (P) einen Schritt des Erkennens (K) einer Kipprichtung des Elektromotors (1) in Bezug auf eine Neutralposition des Elektromotors (1) umfasst.

8. Verfahren nach einem der Ansprüche 1 bis 4, **dadurch gekennzeichnet, dass** der Schritt des Erkennens (A) der Richtung und/oder der Daten der Neigung (P) einen Schritt des Erkennens (K') der Drehrichtung eines Antriebsmittels des Rotors des Elektromotors (1) umfasst, das mit der Parkbremsvorrichtung (9) zusammenwirkt, um das Fahrzeug (20) unbeweglich zu machen.

9. Verfahren nach einem der Ansprüche 1 bis 8, **dadurch gekennzeichnet, dass** es einen Schritt des Speicherns (J) der Richtung und/oder der Daten der Neigung (P), die erkannt wurden, umfasst.

10. Vorrichtung zur Steuerung eines Antriebsstrangs eines Fahrzeugs (20), welches in einer Parkposition unbeweglich ist, **dadurch gekennzeichnet, dass** sie Mittel umfasst, die dafür ausgelegt sind, das Verfahren nach einem der Ansprüche 1 bis 9 durchzuführen.

11. Kraftfahrzeug (20), welches einen Antriebsstrang, eine Parkbremsvorrichtung (9), um das Fahrzeug (20) in einer Parkposition unbeweglich zu machen, wenigstens einen Elektromotor (1) und eine Vorrichtung zur Steuerung des Antriebsstrangs nach Anspruch 10 umfasst.

## Claims

1. Method for controlling a power train of a vehicle (20) immobilized in a parking position, the vehicle (20) being equipped with a parking brake device (9) for immobilizing the vehicle and with at least one electric motor (1), the method comprising the following steps:
- detection (A) of the direction of and/or data for a slope (P) when the parking brake device is in an applied position;
- detection (B) of a transition of the parking brake device (9) from the applied position to a released position; and
- application (C) of a motor torque setpoint to the electric motor (1) on the basis of the detected direction of and/or the data for the slope (P),
the method being **characterized in that** it further comprises a progressive transition step (D) from a non-zero value of the motor torque setpoint towards a zero value.

2. Method according to Claim 1, **characterized in that** the application (C) of the torque setpoint is maintained from the start of the transition from the applied position to the end of the transition to the released position.

3. Method according to Claim 1 or 2, **characterized in that** the transition of the parking brake device from the applied position to the released position, and back again, is implemented by the actuation of a means (10) for controlling the parking brake device (9).

4. Method according to any one of Claims 1 to 3, **characterized in that** the detection (A) of the direction of the slope (P) is carried out when a control unit (8) of the parking brake device (9) is in a position of disengagement and when the parking brake device (9) is in its applied position.

5. Method according to any one of Claims 1 to 4, **characterized in that** the detection step (A) comprises a step (I) for determining the value of the slope (P).

6. Method according to Claim 5, **characterized in that** the steps for the detection (A) of the direction of and/or the data for the slope (P) and for the determination (I) of the value of the slope (P) are concurrent.

7. Method according to any one of Claims 1 to 4, **characterized in that** the step for the detection (A) of the direction of and/or the data for the slope (P) comprises a step for the detection (K) of a direction of tilting of the electric motor (1) in relation to a neutral position of said electric motor (1).

8. Method according to any one of Claims 1 to 4, **characterized in that** the step for the detection (A) of the direction of and/or the data for the slope (P) comprises a step for the detection (K') of the direction of rotation of a means for driving the rotor of the electric motor (1) interacting with the parking brake device (9) in order to immobilize the vehicle (20).

9. Method according to any one of Claims 1 to 8, **characterized in that** it comprises a step for the storage (J) of the direction of and/or the detected data for the slope (P).

10. Device for controlling a power train of a vehicle (20) immobilized in a parking position, **characterized in that** it comprises means arranged so as to implement the method according to one of Claims 1 to 9.

11. Motor vehicle (20) comprising a power train, a parking brake device (9) to immobilize the vehicle (20) in a parking position, at least one electric motor (1) and a device for controlling said power train according to Claim 10.
